# EUROPÄISCHE PATENTANMELDUNG

(11) **EP 4 155 280 A1**
(43) Veröffentlichungstag der Anmeldung: **29.03.2023**
(21) Anmeldenummer: 22192065.5
(22) Anmeldetag: 25.08.2022
(51) Int. Cl.: C04B 33/132, C04B 33/04, C04B 33/22, C04B 33/32

(54) **VERFAHREN ZUR HERSTELLUNG VON KERAMISCHEN WAREN**

(30) Priorität: 22.09.2021 AT 507462021
(71) Anmelder: Wienerberger AG, 1100 Wien (AT)
(72) Erfinder: Mag. Dr. KURKA, Andreas, 1040 Wien (AT); Mag. GAGGL, Wolfgang, 2500 Baden (AT); FRÜH, Gottfried, 3034 Maria Anzbach (AT); Dipl.-Ing.Dr. RATH, Johannes, 1120 Wien (AT)
(74) Vertreter: Gibler & Poth Patentanwälte KG

(57) **Zusammenfassung**

Bei einem Verfahren zur Herstellung von keramischen Waren (6) wird vorgeschlagen, dass in einem Karbonaterzeugungsschritt (1) Stücke von recycelten keramischen Waren zur Erhöhung ihrer Karbonatgehalte mit Kohlenstoffdioxid begast werden, wobei in einem nachfolgenden Mischschritt (2) die mit Karbonaten angereicherten Stücke der recycelten keramischen Waren mit Ton zu einem Rohlingsmaterial vermischt werden, wobei in einem nachfolgenden Formschritt (3) Rohlinge der keramischen Waren geformt werden und die Rohlinge in einem nachfolgenden Brennschritt (4) gebrannt werden, wobei in dem Formschritt (3) und/oder in dem Brennschritt (4) zur Vermeidung der Dekomposition der Karbonate ein vorgegebener Druck verwendet wird.

## Beschreibung

Die Erfindung betrifft ein Verfahren zur Herstellung von keramischen Waren gemäß dem Oberbegriff des Patentanspruches 1.

Es ist bekannt, dass zur kommerziellen Herstellung von keramischen Waren, auch als Keramikwaren bezeichnet, insbesondere von Mauerziegeln, ungebrannte Rohlinge aus unterschiedlichen Ausgangsstoffen gefertigt werden, wobei die Ausgangsstoffe zu ungebrannten Rohlingen verarbeitet und anschließend in einem Ofen gebrannt werden. Beim Brennen nimmt die Druckfestigkeit der Keramikware üblicherweise mit zunehmender Brenntemperatur zu, wobei die Herstellung von Keramikwaren mit hoher Druckfestigkeit entsprechend energieaufwendig ist und hohe Kohlenstoffdioxidemissionen erfordert. Durch die erhöhte Brenntemperatur erfolgt die Dekomposition von in den Ausgangsstoffen gebundenen Karbonaten, wodurch beträchtliche Mengen an Kohlenstoffdioxid freigesetzt und in die Umwelt abgeleitet werden. Durch ein steigendes Umweltbewusstsein der Politik und der Bevölkerung, insbesondere hinsichtlich des Klimawandels, steigt der Bedarf an umweltfreundlichen Produktionsmethoden für keramische Waren, insbesondere für Mauerziegel, stark an.

Nachteilig daran ist, dass die konventionelle Herstellung von druckfesten Keramikwaren mit hohen Kohlenstoffdioxidemissionen verbunden ist und diese Keramikwaren eine stark negative Kohlenstoffdioxidbilanz aufweisen. Selbst konventionell hergestellte Keramikwaren mit einer geringeren Druckfestigkeit erfordern hohe Kohlenstoffdioxidemissionen bei deren Herstellung. Die Kohlenstoffdioxidbilanz berücksichtigt hierbei insbesondere die Emissionen von Kohlenstoffdioxid für den Abbau, den Transport und für die weitere Verarbeitung der Ausgangsstoffe, insbesondere beim Pressen und Brennen der Ausgangsstoffe bis hin zu der fertigen keramischen Ware.

Aufgabe der Erfindung ist es daher ein Verfahren eingangs genannter Art anzugeben, mit welchem die genannten Nachteile vermieden werden können, mit welchem druckfeste keramische Waren mit einer verbesserten Kohlenstoffdioxidbilanz hergestellt werden können.

Erfindungsgemäß wird dies durch die Merkmale des Patentanspruches 1 erreicht.

Dadurch ergibt sich der Vorteil, dass druckfeste keramische Waren mit einer verbesserten, insbesondere mit einer positiven, Kohlenstoffdioxidbilanz hergestellt werden können. Eine positive Kohlenstoffdioxidbilanz bedeutet hierbei, dass bei der Herstellung der keramischen Waren mehr Kohlenstoffdioxid verbraucht bzw. aus der Umgebung aufgenommen wird, als freigesetzt wird. Hierdurch kann ein positiver Beitrag zur Bekämpfung des Klimawandels geleistet werden, da in dem Karbonaterzeugungsschritt Stücke von im Wesentlichen karbonatarmen recycelten keramischen Waren zur Erhöhung ihrer Karbonatgehalte mit Kohlenstoffdioxid begast werden und somit in den recycelten keramischen Waren Karbonate angereichert werden und demnach deren Karbonatgehalt erhöht wird. Der Karbonatgehalt der hergestellten keramischen Ware ist hierbei höher als der Karbonatgehalt der recycelten keramischen Waren. Die recycelten keramischen Waren fungieren hierbei als Karbonatspeicher und die recycelten keramischen Waren können umweltfreundlich wiederverwendet werden. Durch die Speicherung von Kohlenstoffdioxid in den recycelten keramischen Waren, welches Kohlenstoffdioxid insbesondere in anderen Prozessen als Nebenprodukt frei wurde, kann eine positive Kohlenstoffdioxidbilanz für die keramische Ware erreicht werden, da mehr Kohlenstoffdioxid in den keramischen Waren gespeichert wird, als bei der Herstellung der keramischen Waren erzeugt wird. Dadurch, dass in dem Formschritt und/oder in dem Brennschritt zur Vermeidung der Dekomposition der Karbonate ein vorgegebener Druck verwendet wird, gehen die Karbonate während des Formschrittes und während des Brennschrittes nicht durch Dekomposition verloren und die Karbonate bleiben dauerhaft in den hergestellten keramischen Waren gespeichert.

Weiters ist eine keramische Ware mit einem Karbonatgehalt mit einem Masseanteil von mindestens 5%, bevorzugt mindestens 10%, insbesondere mindestens 15%, vorgesehen.

Die Unteransprüche betreffen weitere vorteilhafte Ausgestaltungen der Erfindung. Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:

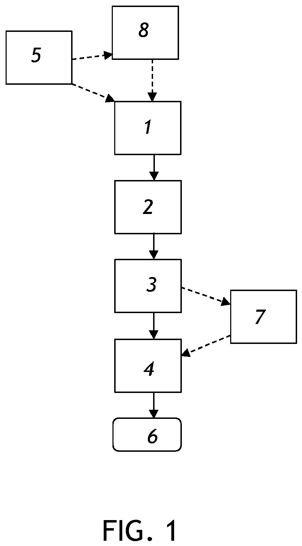

Fig. 1 eine schematische Darstellung unterschiedlicher Schritte eines Verfahrens zur Herstellung von keramischen Waren.

Die Fig. 1 zeigt Schritte eines Verfahrens zur Herstellung von keramischen Waren 6, wobei in einem Karbonaterzeugungsschritt 1 Stücke von recycelten keramischen Waren zur Erhöhung ihrer Karbonatgehalte mit Kohlenstoffdioxid begast werden, wobei in einem nachfolgenden Mischschritt 2 die mit Karbonaten angereicherten Stücke der recycelten keramischen Waren mit Ton zu einem Rohlingsmaterial vermischt werden, wobei in einem nachfolgenden Formschritt 3 Rohlinge der keramischen Waren geformt werden und die Rohlinge in einem nachfolgenden Brennschritt 4 gebrannt werden, wobei in dem Formschritt 3 und/oder in dem Brennschritt 4 zur Vermeidung der Dekomposition der Karbonate ein vorgegebener Druck verwendet wird.

Dadurch ergibt sich der Vorteil, dass druckfeste keramische Waren 6 mit einer verbesserten, insbesondere mit einer positiven, Kohlenstoffdioxidbilanz hergestellt werden können. Eine positive Kohlenstoffdioxidbilanz bedeutet hierbei, dass bei der Herstellung der keramischen Waren 6 mehr Kohlenstoffdioxid verbraucht bzw. aus der Umgebung aufgenommen wird, als freigesetzt wird. Hierdurch kann ein positiver Beitrag zur Bekämpfung des Klimawandels geleistet werden, da in dem Karbonaterzeugungsschritt 1 Stücke von im Wesentlichen karbonatarmen recycelten keramischen Waren zur Erhöhung ihrer Karbonatgehalte mit Kohlenstoffdioxid begast werden und somit in den recycelten keramischen Waren Karbonate angereichert werden und demnach deren Karbonatgehalt erhöht wird. Der Karbonatgehalt der hergestellten keramischen Ware 6 ist hierbei höher als der Karbonatgehalt der recycelten keramischen Waren. Die recycelten keramischen Waren fungieren hierbei als Karbonatspeicher und die recycelten keramischen Waren können umweltfreundlich wiederverwendet werden. Durch die Speicherung von Kohlenstoffdioxid in den recycelten keramischen Waren, welches Kohlenstoffdioxid insbesondere in anderen Prozessen als Nebenprodukt frei wurde, kann eine positive Kohlenstoffdioxidbilanz für die keramische Ware 6 erreicht werden, da mehr Kohlenstoffdioxid in den keramischen Waren 6 gespeichert wird, als bei der Herstellung der keramischen Waren 6 erzeugt wird. Dadurch, dass in dem Formschritt 3 und/oder in dem Brennschritt 4 zur Vermeidung der Dekomposition der Karbonate ein vorgegebener Druck verwendet wird, gehen die Karbonate während des Formschrittes 3 und während des Brennschrittes 4 nicht durch Dekomposition verloren und die Karbonate bleiben dauerhaft in den hergestellten keramischen Waren 6 gespeichert.

Die keramische Ware 6 kann insbesondere ein Irdengut, ein Sinterzeug oder eine keramische Sondermasse sein. Besonders bevorzugt kann die keramische Ware 6 eine Baukeramik, insbesondere ein Mauerziegel, sein. Die keramische Ware 6 ist insbesondere ein gebrannter Rohling.

Insbesondere bei der Verwendung von recycelten Ziegeln kann Kohlenstoffdioxid besonders gut in den recycelten Ziegeln bzw. Ziegelbruchstücken angereichert und gespeichert werden. Die recycelten Ziegel bzw. die Stücke der recycelten Ziegel können beispielsweise von abgerissenen Häusern oder Brücken stammen und bevorzugt Baukeramiken sein. Die recycelten keramischen Waren können insbesondere einen niedrigen oder keinen Karbonatgehalt aufweisen. Bei der Begasung von recycelten keramischen Waren umfassend Kalziumsilikate mit Kohlenstoffdioxid findet insbesondere folgende chemische Reaktion statt:

CaSiO₃ + CO₂ = CaCO₃ + SiO₂

Bei der Begasung von recycelten keramischen Waren umfassend Portlandit mit Kohlenstoffdioxid findet insbesondere folgende chemische Reaktion statt:

Ca(OH)₂ + CO₂ = CaCO₃ + H₂O

In einem nachfolgenden Mischschritt 2 werden die mit Karbonaten angereicherten Stücke der recycelten keramischen Waren mit Ton zu einem Rohlingsmaterial vermischt, um eine formbare Masse zu erzeugen.

In einem dem Mischschritt 2 nachfolgenden Formschritt 3 werden Rohlinge der keramischen Waren aus dem Rohlingsmaterial geformt, was beispielhaft in Fig.1 dargestellt ist. In einem dem Formschritt 3 nachfolgenden Brennschritt 4 werden die geformten Rohlinge gebrannt, wobei in dem Formschritt 3 und/oder in dem Brennschritt 4 zur Vermeidung der Dekomposition der Karbonate ein vorgegebener Druck verwendet wird. Hierbei kann in dem Formschritt 3 ein erhöhter bzw. hoher Druck gewählt werden, wodurch bereits ein fester Rohling entsteht, welcher Rohling bevorzugt in dem Brennschritt 4 bei niedrigen Brenntemperaturen gebrannt wird, um die Dekomposition der Karbonate zu vermeiden und trotzdem eine druckfeste keramische Ware 6 zu erzeugen.

Es können die Rohlinge aber auch in dem Formschritt 3 unter Normaldruck geformt werden und in dem Brennschritt 4 unter einem erhöhten bzw. hohen Druck gebrannt werden, um die Dekomposition der Karbonate zu vermeiden. Durch erhöhte bzw. hohe Drücke kann die Brenntemperatur in dem Brennschritt 4 erhöht werden und es kann trotzdem die Dekomposition der Karbonate vermieden oder zumindest stark verringert werden. Der vorgegebene Druck wird hierbei in Korrelation zu der jeweiligen Brenntemperatur gewählt. Hierbei wird auch eine druckfeste keramische Ware 6 erhalten, welche einen hohen Karbonatgehalt aufweist.

Es kann auch vorgesehen sein, dass die Rohlinge in dem Formschritt 3 unter erhöhtem bzw. hohem Druck geformt werden und dass die Rohlinge in dem Brennschritt 4 bei erhöhten Brenntemperaturen unter erhöhtem bzw. hohem Druck gebrannt werden, um die Dekomposition der Karbonate zu vermeiden und um eine besonders druckfeste keramische Ware 6 mit einem hohen Karbonatgehalt herzustellen.

Alternativ kann vorgesehen sein, dass die Rohlinge in dem Formschritt 3 unter Normaldruck geformt werden und in dem Brennschritt 4 bei niedrigen Brenntemperaturen gebrannt werden, um die Dekomposition der Karbonate zu vermeiden.

Der Begriff Normaldruck entspricht hierbei im Wesentlichen dem Atmosphärendruck und der Begriff niedrige Brenntemperaturen entspricht hierbei Brenntemperaturen, bei welchen die Dekomposition der Karbonate bei Normaldruck nicht erfolgt, insbesondere Temperaturen kleiner gleich 600°C.

Um die Kohlenstoffdioxidbilanz weiter zu verbessern und um insbesondere eine positive Kohlenstoffdioxidbilanz zu erzielen, kann vorgesehen sein, dass der Brennschritt 4 in einem elektrischen Ofen erfolgt.

Es kann besonders bevorzugt vorgesehen sein, dass in dem Karbonaterzeugungsschritt 1 ein Kohlenstoffdioxidpartialdruck von mindestens 0,1 MPa, bevorzugt mindestens 0,5 MPa, insbesondere mindestens 1 MPa, verwendet wird. Hierdurch können die Stücke der recycelten keramischen Waren effizient mit Karbonaten angereichert werden. Der Karbonaterzeugungsschritt 1 kann bevorzugt in einer Druckkammer erfolgen, wobei der Kohlenstoffdioxidpartialdruck bevorzugt dem Gesamtdruck entspricht, welcher auf die Stücke der recycelten keramischen Waren einwirkt. Das bedeutet, dass bevorzugt lediglich Kohlenstoffdioxid in die Druckkammer eingeleitet wird und eine darin befindliche Luft zuvor oder während des Einströmens des Kohlenstoffdioxids aus der Druckkammer abgeleitet wird.

Es kann vorgesehen sein, dass zumindest ein Teil, insbesondere ein Großteil, der recycelten keramischen Waren keinen oder einen geringen Karbonatgehalt aufweist. Hierdurch können Karbonate besonders gut in den recycelten keramischen Waren angereichert werden.

Es kann weiters bevorzugt vorgesehen sein, dass die Stücke der recycelten keramischen Waren vor oder während der Begasung mit Kohlenstoffdioxid angefeuchtet werden. Es hat sich hierbei gezeigt, dass der Karbonatgehalt bei angefeuchteten Stücken der recycelten keramischen Waren nach der Begasung deutlich höher ist als bei trockenen Stücken der recycelten keramischen Waren. Durch das Anfeuchten wird somit die Karbonatbildung begünstigt.

Es kann hierzu vorgesehen sein, dass die angefeuchteten Stücke der recycelten keramischen Waren wenigstens 15 Masseprozent, insbesondere wenigstens 25 Masseprozent, bevorzugt wenigstens 30 Masseprozent, Wasser aufweisen.

Bevorzugt kann vorgesehen sein, dass die Begasungsdauer der recycelten keramischen Waren wenigstens 10 Minuten, bevorzugt wenigstens 12 Stunden, insbesondere wenigstens 24 Stunden, beträgt. Es hat sich gezeigt, dass der Karbonatgehalt mit der Einwirkdauer und dem Kohlenstoffdioxiddruck korreliert. Bei längerer Einwirkdauer und bei erhöhtem Kohlenstoffdioxiddruck wurde eine erhöhte Karbonatbildung in den Stücken der recycelten keramischen Waren erreicht.

Bei Versuchen mit gemahlenem Schleifstaub von einer ersten Stätte konnte nach einer Begasungsdauer von 10 Minuten bei einem Kohlenstoffdioxiddruck von 0,1 MPa ein Karbonatgehalt von 0,4% nachgewiesen werden. Bei Versuchen mit gemahlenem Schleifstaub konnte nach einer Begasungsdauer von 30 Minuten bei 0,1 MPa ein Karbonatgehalt von 1,5% nachgewiesen werden. Bei einem Kohlenstoffdioxiddruck von 0,1 MPa und einer Begasungsdauer von 1 Stunde konnte ein Karbonatgehalt von 1,9% und bei einem Kohlenstoffdioxiddruck von 0,1 MPa und einer Begasungsdauer von 24 Stunden konnte ein Karbonatgehalt von 2,9% nachgewiesen werden.

Bei Versuchen mit gemahlenem Schleifstaub von der ersten Stätte konnte nach einer Begasungsdauer von 1,5 Stunden bei einem Kohlenstoffdioxiddruck von 1 MPa ein Karbonatgehalt von 2,7% nachgewiesen werden. Bei Versuchen mit gemahlenem Schleifstaub konnte nach einer Begasungsdauer von 24 Stunden bei einem Kohlenstoffdioxiddruck von 1 MPa ein Karbonatgehalt von 4% nachgewiesen werden. Der Feuchtegehalt bei diesen Versuchen von der ersten Stätte lag bei 20 Masseprozent Wasser.

Bei Versuchen mit gemahlenem Schleifstaub von einer zweiten Stätte konnten folgende Karbonatgehalte für folgende Bedingungen ermittelt werden: Nach einer Begasungsdauer von 10 Minuten bei einem Kohlenstoffdioxiddruck von 0,1 MPa konnte ein Karbonatgehalt von 10,3%, nach einer Begasungsdauer von 30 Minuten bei einem Kohlenstoffdioxiddruck von 0,1 MPa konnte ein Karbonatgehalt von 10,9%, nach einer Stunde bei 0,1 MPa konnte ein Karbonatgehalt von 11,0% und nach 24 Stunden bei 0,1 MPa konnte ein Karbonatgehalt von 12,2% nachgewiesen werden.

Bei Versuchen mit gemahlenem Schleifstaub von der zweiten Stätte bei einem Kohlenstoffdioxiddruck von 1 MPa konnten für Begasungsdauern zwischen 1,5 Stunden und 24 Stunden Karbonatgehalte von 11,2% bis 13,0% nachgewiesen werden. Der Feuchtegehalt bei diesen Versuchen von der zweiten Stätte lag zwischen 20 Masseprozent - 30 Masseprozent Wasser.

Bei einem weiteren Versuch wurde von der zweiten Stätte gemahlener, circa 1 Jahr alter Ziegelbruch entnommen und mit Kohlenstoffdixodid begast. Hierbei ergaben sich Karbonatgehalte von 5,6% bei 10 Minuten Begasungsdauer und 0,1 MPa bis zu 7,3% bei einer Begasungsdauer von 24 Stunden und 0,1 MPa. Bei einer Begasungsdauer von 1,5 Stunden bei einem Kohlenstoffdioxiddruck von 1 MPa konnte ein Karbonatgehalt von 7,0% festgestellt werden und bei einer Begasungsdauer von 24 Stunden bei einem Kohlenstoffdioxiddruck von 1 MPa konnte ein Karkbonatgehalt von 8,7% festgestellt werden. Der Feuchtegehalt bei diesen Versuchen von der zweiten Stätte lag bei 20 Masseprozent Wasser. Bei dieser Versuchsreihe konnte auch ein Karbonatgehalt von 3,6% bei einer Probe festgestellt werden, welche 24 Stunden lang unter einem Kohlenstoffdioxiddruck von 1 MPa begast wurde.

Obige Versuche zeigen, dass insbesondere angefeuchtete Proben, bei fortschreitender Begasungsdauer und erhöhtem Druck einen erhöhten Karbonatgehalt aufweisen. Je nach Bedarf und technischem Nutzen kann somit der Karbonatgehalt in Abfallprodukten wie Ziegelbruch oder Schleifstaub und auch in recyceltem keramischen Material durch die Begasungsdauer und durch den Begasungsdruck, demnach dem Kohlenstoffdioxiddruck, beeinflusst werden. Es hat sich weiters herausgestellt, dass der Karbonatgehalt nach der Begasung von der Ausgangszusammensetzung des keramischen Materials, insbesondere des Ziegelmaterials, ist.

Es kann besonders bevorzugt vorgesehen sein, dass das Rohlingsmaterial wenigstens 25%, insbesondere wenigstens 50%, bevorzugt wenigstens 75%, Ton enthält. Hierdurch kann ein nicht-plastischer Anteil, insbesondere die recycelten keramischen Waren, in dem Formschritt 3 effizient gebunden werden.

Als besonders vorteilhaft haben sich ein Mischungsverhältnis von 50% Ton und 50% mit Karbonaten angereicherte Stücke oder ein Mischungsverhältnis von 25% Ton und 75% mit Karbonaten angereicherte Stücke erwiesen.

Es kann alternativ vorgesehen sein, dass x% Ton mit y% mit Karbonaten angereicherte Stücke und weiters mit z% weiteren Stoffen, insbesondere Zuschlagstoffen, vermischt werden, wobei die Gesamtsumme der Stoffe x,y,z 100% beträgt.

Die Zuschlagstoffe können körnige bzw. granulatförmige Materialien, insbesondere zerkleinerte Ziegelstücke, welche nicht mit Kohlenstoffdioxid begast wurden, umfassen. Durch den Zusatz von körnigen bzw. granulatförmigen Materialien wird für das Rohlingsmaterial bzw. die ungebrannten Rohlinge die Trocknungsgeschwindigkeit erhöht, das Schrumpfen unter Wärmeeinwirkung erniedrigt, die Abriebfestigkeit erhöht, die thermische Expansion erniedrigt sowie eine Reduktion der Dichte ermöglicht. Weiters können die Zuschlagstoffe bevorzugt Sand und/oder Schamotte umfassen.

Hierdurch wird eine grobe Korngrößenverteilung in dem Rohlingsmaterial bzw. dem ungebrannten Rohling erreicht, wodurch Hohlräume besonders gut erzeugt werden können und Luft in dem Formschritt 3 einfach aus dem ungebrannten Rohling entweichen kann. Hierbei ist nicht zwingend gemeint, dass die gesamte Luft aus dem Rohlingsmaterial bzw. ungebrannten Rohling entweichen muss, sondern eine vordefinierte Menge bzw. ein Großteil der in dem ungebrannten Rohling vorhandenen Luft.

Es kann weiters vorgesehen sein, dass die Zuschlagstoffe biogene Materialien, insbesondere organischen Kohlenstoff, umfassen.

Es kann weiters bevorzugt vorgesehen sein, dass die Zuschlagstoffe Glas und/oder Schmelzbehandlungsmittel umfassen. Hierdurch können besonders druckfeste keramische Waren 6 erhalten werden.

Es kann weiters bevorzugt vorgesehen sein, dass in dem Formschritt 3 das Rohlingsmaterial mit einem Druck von wenigstens 25 MPa, insbesondere wenigstens 50 MPa, bevorzugt wenigstens 100 MPa, gepresst wird. Hierdurch wird das Rohlingsmaterial verdichtet wodurch bereits ein im Wesentlichen druckfester Rohling entsteht. Dieser im Wesentlichen druckfeste Rohling wird nachfolgend in dem Brennschritt 4 gebrannt, wodurch die Druckfestigkeit der keramischen Ware 6 deutlich erhöht und die Dekomposition der Karbonate vermieden wird. Der Formschritt 3 weist hierbei einen Pressschritt auf. Das Rohlingsmaterial wird hierbei in eine Form eingefüllt und anschließend gepresst.

Es kann auch vorgesehen sein, dass das Rohlingsmaterial mit einem Druck von maximal 200 MPa, insbesondere maximal 150 MPa, bevorzugt maximal 100 MPa, gepresst wird.

Der Pressschritt kann in mehreren Einzelschritten oder in einem einzigen Schritt erfolgen. Beispielsweise kann die Presskraft bzw. Pressrate in den jeweiligen Schritten variieren.

Bevorzugt können zum Pressen eine hydraulische Presse oder ein Kolbenextruder verwendet werden.

Es kann vorgesehen sein, dass im Pressschritt das Rohlingsmaterial als mehrere ungebrannte Rohlinge nebeneinander in einer Presse gepresst werden. Hierzu kann jeder Rohling eine eigene Pressform aufweisen, es kann aber auch vorgesehen sein, dass eine Pressform mehrere Formen aufweist, in welchen das Rohlingsmaterial angeordnet ist und gepresst wird.

Die jeweilige Pressform bestimmt hierbei die Form des gepressten Rohlings. Die Pressform kann verschiedene geometrische Formen wie beispielsweise Quader oder Polygone aufweisen.

Es kann bevorzugt vorgesehen sein, dass die gepressten Rohlinge nach dem Formschritt 3 in einem Rohling-Trocknungsschritt 7 getrocknet werden. Bevorzugt kann vorgesehen sein, dass die gepressten Rohlinge nach dem Rohling-Trocknungsschritt 7 einen Feuchtegehalt von circa 3% aufweisen. Hierdurch wird vermieden, dass die gepressten Rohlinge aufgrund von der Ausdehnung von Feuchtigkeit in dem Brennschritt 4 Risse bekommen oder gar aufplatzen.

Es kann besonders bevorzugt vorgesehen sein, dass in dem Brennschritt 4 zumindest zeitweise eine Temperatur von maximal 600°C, insbesondere maximal 550°C, bevorzugt maximal 500°C, verwendet wird. Durch diese niedrigen Temperaturen kann die Dekomposition der Karbonate vermieden oder zumindest stark verringert werden.

Solche Temperaturen reichen nach dem Pressen bei den zuvor beschriebenen Drücken bereits aus, um die chemischen Bindungen der keramischen Ware 6 zu formen, welche für die besonders guten mechanischen Eigenschaften wie die hohe Druckfestigkeit der bei einer niedrigen Temperatur gebrannten keramischen Ware 6 verantwortlich sind.

Hierbei können verschiedene Brennzyklen mit eigenen Temperaturbereichen sowie Aufheizraten und Zeitintervallen verwendet werden.

Hierbei können je nach selektiver Wahl der Temperatur die gewünschten physikalisch chemischen Eigenschaften der keramischen Ware 6 eingestellt werden.

Es kann bevorzugt vorgesehen sein, dass in dem Brennschritt 4 ein Kohlenstoffdioxidpartialdruck von wenigstens 0,4 MPa, insbesondere wenigstens 0,7 MPa, bevorzugt wenigstens 1 MPa, verwendet wird. Durch die Kombination der zuvor genannten niedrigen Brenntemperaturen mit einem erhöhten Kohlenstoffdioxidpartialdruck kann die Dekomposition der Karbonate im Wesentlichen gänzlich vermieden und somit die Umweltbelastung stark reduziert werden.

Es kann alternativ, beispielsweise für Spezialanwendungen, vorgesehen sein, dass in dem Brennschritt 4 zumindest zeitweise eine Temperatur von maximal 850°C, insbesondere maximal 750°C, bevorzugt maximal 650°C, verwendet wird. Hierbei empfiehlt sich jedoch eine Erhöhung des Kohlenstoffdioxidpartialdruckes, beispielsweise auf wenigstens 4 MPa, insbesondere auf wenigstens 10 MPa, bevorzugt auf wenigstens 20 MPa, um die Dekomposition der Karbonate bei diesen Temperaturen zu vermeiden.

Es kann auch vorgesehen sein, dass die recycelten keramischen Waren in einem dem Karbonaterzeugungsschritt 1 vorhergehenden Mahlschritt 5 gemahlen werden. Diese Variante ist durch einen Pfeil mit einer strichlierten Linie beispielhaft in Fig. 1 angedeutet. Durch das Mahlen werden die recycelten keramischen Waren zerkleinert, wodurch kleinere Korngrößen der recycelten keramischen Waren erhalten werden. Hierdurch kann jedoch eine große Oberfläche der recycelten keramischen Waren und demnach eine große Angriffsfläche für das Kohlenstoffdioxid in dem Karbonaterzeugungsschritt 1 geschaffen werden, wodurch die Karbonaterzeugung besonders gut funktioniert.

Es kann auch vorgesehen sein, dass die recycelten keramischen Waren in einem Granulierungsschritt 8 granuliert werden, was beispielhaft in Fig.1 angedeutet ist. Hierbei wird ein Haufwerk mit Partikeln enger Partikelgröße erhalten.

Insbesondere kann der Granulierungsschritt 8 die Verwendung von Wasser umfassen. Dadurch ergibt sich der Vorteil, dass bei der Verwendung von Tonmineralien als recycelte keramische Waren, ein feines und annähernd kugelförmiges Granulat einfach hergestellt werden kann.

Insbesondere kann vorgesehen sein, dass mindestens 90% des Granulats eine Partikelgröße von zumindest 100µm aufweist.

Bevorzugt kann vorgesehen sein, dass mindestens 90% des Granulats eine Partikelgröße von maximal 1000µm aufweist.

Beispielsweise kann eine im Granulierungsschritt 8 hergestellte Verteilung der Partikelgröße Partikel mit 7% größer 1000µm, 25% größer 500µm und kleiner 1000 µm, 40% größer 250µm und kleiner 500µm, 20% größer 125µm und kleiner 250µm, 6% größer 63µm und kleiner 125µm, sowie 2% kleiner 63µm, umfassen.

Dadurch kann besonders vorteilhaft ein Entweichen der Luft bei dem Verdichten, insbesondere bei dem Pressen, der Partikel erreicht werden, wobei besonders dichte Rohlinge hergestellt werden können und auch größere keramische Waren 6 gebrannt werden können.

Der Granulierungsschritt 8 kann insbesondere vor dem Formschritt 3 erfolgen.

Alternativ oder zusätzlich kann der Granulierungsschritt 8 vor dem Karbonaterzeugungsschritt 1 erfolgen, was beispielhaft in Fig. 1 dargestellt ist.

Weiters ist eine keramische Ware 6 vorgesehen, welche einen Karbonatgehalt mit einem Masseanteil von mindestens 5%, bevorzugt mindestens 10%, insbesondere mindestens 15%, aufweist.

Es kann auch vorgesehen sein, dass die keramische Ware 6 einen Karbonatgehalt mit einem Masseanteil von mindestens 20%, insbesondere mindestens 25%, bevorzugt mindestens 30%, aufweist.

Beispielsweise können in einer Tonne hergestellter keramischer Ware 6, beispielsweise in einer Tonne hergestellter Ziegel, ca. 35 Kilogramm Kohlenstoffdioxid langfristig gespeichert werden. Zusätzlich können alte Ziegelstücke sowie Ziegelbruch recycelt werden, wodurch die Ressourcen geschont werden können. Hierdurch kann im großen Maßstab ein entscheidender Beitrag zur Bekämpfung des Klimawandels geleistet werden.

Die nach dem erfindungsgemäßen Verfahren hergestellte keramische Ware 6 weist neben einer hohen Druckfestigkeit auch gute akustische Eigenschaften auf, welche sich vorteilhaft in Gebäuden mit Lärmbelastung auswirken.

Besonders bevorzugt ist die keramische Ware 6 ein Baumaterial, insbesondere ein Ziegelstein.

Die keramische Ware 6 kann auch in einem vorgefertigten Bauteil, beispielsweise in einer vorgefertigten Mauer, verwendet werden.

Die keramische Ware 6 kann bevorzugt eine Länge von mindestens 170 mm, insbesondere mindestens 200 mm, bevorzugt mindestens 230 mm, aufweisen Die keramische Ware 6 kann bevorzugt eine Länge von maximal 300 mm, insbesondere maximal 270 mm, bevorzugt maximal 240 mm, aufweisen.

Die keramische Ware 6 kann bevorzugt eine Breite von mindestens 60 mm, insbesondere mindestens 80 mm, bevorzugt mindestens 100 mm, aufweisen.

Die keramische Ware 6 kann bevorzugt eine Breite von maximal 130 mm, insbesondere maximal 120 mm, bevorzugt maximal 110 mm, aufweisen.

Die keramische Ware 6 kann bevorzugt eine Höhe von mindestens 40 mm, insbesondere mindestens 50 mm, bevorzugt mindestens 60 mm, aufweisen

Die keramische Ware 6 kann bevorzugt eine Höhe von maximal 90 mm, insbesondere maximal 80 mm, bevorzugt maximal 70 mm, aufweisen.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

Das Bindewort "oder" ist als inklusiv und nicht als exklusiv zu interpretieren. Sofern es sich aus dem Kontext nicht anders ergibt, umfasst "A oder B" auch "A und B", wobei "A" und "B" beliebige Merkmale darstellen.

Bei Wertebereichen sind die Endpunkte mitumfasst, sofern es sich aus dem Kontext nicht anders ergibt.

## Patentansprüche

1. Verfahren zur Herstellung von keramischen Waren (6), wobei in einem Karbonaterzeugungsschritt (1) Stücke von recycelten keramischen Waren zur Erhöhung ihrer Karbonatgehalte mit Kohlenstoffdioxid begast werden, wobei in einem nachfolgenden Mischschritt (2) die mit Karbonaten angereicherten Stücke der recycelten keramischen Waren mit Ton zu einem Rohlingsmaterial vermischt werden, wobei in einem nachfolgenden Formschritt (3) Rohlinge der keramischen Waren geformt werden und die Rohlinge in einem nachfolgenden Brennschritt (4) gebrannt werden, wobei in dem Formschritt (3) und/oder in dem Brennschritt (4) zur Vermeidung der Dekomposition der Karbonate ein vorgegebener Druck verwendet wird.

2. Verfahren nach Anspruch 1, **dadurch gekennzeichnet, dass** in dem Karbonaterzeugungsschritt (1) ein Kohlenstoffdioxidpartialdruck von mindestens 0,1 MPa, bevorzugt mindestens 0,5 MPa, insbesondere mindestens 1 MPa, verwendet wird.

3. Verfahren nach Anspruch 1 oder 2, **dadurch gekennzeichnet, dass** die Begasungsdauer der Stücke der recycelten keramischen Waren wenigstens 10 Minuten, bevorzugt wenigstens 12 Stunden, insbesondere wenigstens 24 Stunden, beträgt.

4. Verfahren nach einem der Ansprüche 1 bis 3, **dadurch gekennzeichnet, dass** das Rohlingsmaterial wenigstens 25%, insbesondere wenigstens 50%, bevorzugt wenigstens 75%, Ton enthält.

5. Verfahren nach einem der Ansprüche 1 bis 4, **dadurch gekennzeichnet, dass** in dem Formschritt (3) das Rohlingsmaterial mit einem Druck von wenigstens 25 MPa, insbesondere wenigstens 50 MPa, bevorzugt wenigstens 100 MPa, gepresst wird.

6. Verfahren nach einem der Ansprüche 1 bis 5, **dadurch gekennzeichnet, dass** in dem Brennschritt zumindest zeitweise eine Temperatur von maximal 600°C, insbesondere maximal 550°C, bevorzugt maximal 500°C, verwendet wird.

7. Verfahren nach einem der Ansprüche 1 bis 6, **dadurch gekennzeichnet, dass** in dem Brennschritt (4) ein Kohlenstoffdioxidpartialdruck von wenigstens 0,4 MPa, insbesondere wenigstens 0,7 MPa, bevorzugt wenigstens 1 MPa, verwendet wird.

8. Verfahren nach einem der Ansprüche 1 bis 7, **dadurch gekennzeichnet, dass** die recycelten keramischen Waren in einem dem Karbonaterzeugungsschritt (1) vorhergehenden Mahlschritt (5) gemahlen werden.

9. Keramische Ware (6), hergestellt gemäß einem Verfahren nach einem der Ansprüche 1 bis 8, **dadurch gekennzeichnet, dass** die keramische Ware (6) einen Karbonatgehalt mit einem Masseanteil von mindestens 5%, bevorzugt mindestens 10%, insbesondere mindestens 15%, aufweist.
